Europäisches Patentamt

European Patent Office

Office européen des brevets

(19)

(11) Veröffentlichungsnummer: **0 271 782 B1**

## EUROPÄISCHE PATENTSCHRIFT

(45) Veröffentlichungstag der Patentschrift: **08.05.91**

(51) Int. Cl.5: **B25B 27/30**

(21) Anmeldenummer: **87117931.3**

(22) Anmeldetag: **04.12.87**

(54) **Federnspanner.**

(30) Priorität: **11.12.86 DE 3642355**
**16.06.87 DE 3720018**

(43) Veröffentlichungstag der Anmeldung:
**22.06.88 Patentblatt 88/25**

(45) Bekanntmachung des Hinweises auf die
Patenterteilung:
**08.05.91 Patentblatt 91/19**

(84) Benannte Vertragsstaaten:
**AT BE CH ES FR GB GR IT LI NL SE**

(56) Entgegenhaltungen:
**EP-A- 0 115 774       DE-A- 2 703 048**
**DE-U- 8 626 909       FR-A- 2 402 572**
**GB-A- 2 017 561       US-A- 3 256 594**

(73) Patentinhaber: **Klann, Horst**
**Terra-Wohnpark 12**
**W-7730 Villingen-Schwenningen 24(DE)**

(72) Erfinder: **Klann, Horst**
**Terra-Wohnpark 12**
**W-7730 Villingen-Schwenningen 24(DE)**

(74) Vertreter: **Neymeyer, Franz, Dipl.-Ing. (FH)**
**Haselweg 20**
**W-7730 Villingen 24(DE)**

EP 0 271 782 B1

## Beschreibung

Die Erfindung betrifft einen Federnspanner für große Schraubenfedern, insbesondere für Kraftfahrzeugachsfedern, nach dem Oberbegriff des Patentanspruches 1.

Bei einem bekannten Federnspanner der gattungsgemäßen Art besteht als Verdrehsicherung zwischen dem zylindrischen Führungsrohr einerseits und ebenfalls zylindrischen Gewinderohr andererseits eine axial verschiebbare Nut-Feder-Verbindung, bzw. ist bei einer anderen Asuführungsform das Ausführungsrohr mit dem Gewinderohr durch einen in einen axialen Führungsschlitz eingreifenden Radialvorsprung undrehbar verbunden (DE-PS 33 04 321). In beiden Fällen ist das Gewinderohr teleskopartig in das Führungsrohr einschiebbar. Bei der einen Ausführungsform ist das Gewinderohr auf seiner Mantelfläche mit wenistens einer beidendig offenen Axialnut versehen, in welche ein in oder am Führungsrohr befestigter Nutenfedernstab oder ein Nutenstein axial verschiebbar eingreift. Bei einer anderen Ausführungsform ist der Radialvorsprung am spindelkopfseitigen Ende des Gewinderohres angeordnet. Er greift in einen stirnseitig offenen, sich annähernd über die Gesamtlänge des Führungsrohres erstreckenden axialen Führungsschlitz des Führungsrohres 1. Bei beiden Ausführungsformen kann die Länge des Führungsrohres gleich groß wie oder kleiner sein als die Länge der Gewindespindel. Die Druckplatten sind jeweils mit zentralen Bohrungen versehen, deren Durchmesser geringfügig größer ist als der Außendurchmesser des Führungsrohres, so daß beide Druckplatten über das Führungsrohr geschoben werden können. Das Gewinderohr ist mit zwei sich diametral gegenüberliegenden Radialfingern versehen, deren radiale Länge größer ist als der Radius der Zentralbohrung. entsprechend sind auch die Vertiefungen, die zur verdrehsicheren Aufnahme der Radialfinger des Gewinderohres in der spindelkopffernen Druckplatte außenseitig vorgesehen sind, in Diametrallage angeordnet. Demgemäß sind auch die beiden radialen Erweiterungen in der spindelkopffernen Druckplatte, durch welche die Radialfinger in Axialrichtung hindurchgeschoben werden können, sich diametral gegenüberliegend angordnet. Durch diese jeweils diametrale Anordnung sowohl der Erweiterungen als auch der Vertiefungen am Rande der Durchstecköffnung bestehen in den dazwischenliegenden Randabschnitten außenseitig jeweils ebene Auflageflächen, auf welchen die Radialfinger aufsitzen können, ohne dabei gegen Verdrehung gesichert zu sein. Dadurch entsteht die Gefahr des Verdrehens der Druckplatte relativ zum Gewinderohr bzw. zu den Radialfingern; dies dazu führen kann, daß die Radialfinger sich während des Spannens einer Feder oder beim Hantieren mit einer gespannten Feder durch eine solche Verdrehung wieder in die Erweiterungen gelangen und so die Druckplatte freigeben können.

Der Erfindung liegt die Aufgabe zugrunde, einen Federspanner der gattungsgemäßen Art auf einfache Weise derart zu verbessern, daß die vorstehend genannte Unfallgefahr mit Sicherheit beseitigt ist, in dem eine Zugverbindung zwischen dem Gewinderohr und der spindelkopffernen Druckplatte nur möglich ist, wenn sich die Radialfinger des Gewinderohres drehsicher in den außenseitigen Vertiefungen der Druckplatte befinden.

Gelöst wird diese Aufgabe erfindungsgemäß dadurch, daß das Gewinderohr an seinem spindelkopffernen Ende wenigstens drei in gleichen Winkelabständen voneinander angeordnete, im wesentlichen keilförmige Radialfinger aufweist und daß die in gleicher Anzahl auf der Außenseite der spindelkopffernen Druckplatte vorhandenen Vertiefungen sowie die jeweils zwischen zwei Vertiefungen liegenden radialen Erweiterungen der Durchstecköffnung außenseitig jeweils schrägfläachig angesenkt sind, daß zumindest im Radienbereich der Radialfinger für diese keine planebene Auflagefläche außerhalb der Vertiefungen vorhanden ist.

Der besondere Vorteil der dadurch erzielt wird, besteht darin, daß durch die Beseitigung jeglicher planebenen Auflageflächen auf der Außenseite der Druckplatte im Radienberiech der Radialfinger und durch die keilförmige der Radialfinger selbst das Zustandekommen einer Zugverbindung zwischen dem Gewinderohr der Druckplatte nur bei gleichzeitiger Bildung eines verdrehsicheren Formschlusses zwischen Radialfingern und der Druckplatte möglich ist. Zudem wird das Auffinden der außenseitigen Vertiefungen, in welche die Radialfinger eingeführt werden müssen, durch die schrägflächigen Ränder der Vertiefungen wesentlich erleichtert wird. Dadurch wird auch die Handhabung einfacher.

Durch die Ausgestaltung der Erfindung nach Anspruch 2 ergibt sich eine weitere Vereinfachung und Erleichterung der Handhabung insofern, als durch die auf den Durchmesser des Gewinderohrres abgestimmte Weite der Durchstecköffnung in der spindelkopffernen Druckplatte zugleich eine radiale Führung zwischen der Druckplatte und dem Gewinderohr zustande kommt, durch welche sich die Zentrierung des Gewinderohres in der Durchstecköffnung praktisch von selbst ergibt.

Während bei dem bekannten Federnspanner (DE-PS 33 04 321) entweder das Führungsrohr oder nur die Nuten-Federnstäbe gleichlang sein müssen wie die Gewindespindel und die spindelkopfferne Druckplatte, um den maximalen Spannhub zu erzielen, entweder über das Führungsrohr oder über die Nuten-Federnstäbe schiebbar sein muß, ist es erforderlich, daß die Durchlaßöffnung der Druckplatte entweder einen auf den Außendurchmesser des Führungsrohres abgestimmten Innendurchmesser oder bei zweifach vorhandenen Nuten-Feder-Stäben für diese entsprechende radiale Erweiterung aufweist. Im einen Fall ist es nicht möglich, die Weite der Durchlaßöffnung auf den Durchmesser des Gewinderohres abzustimmen, weil dieser erheblich kleiner ist als der Durchmesser des Führungsrohes, im anderen Falle wäre es nicht möglich, die Ausbildung der spindelkopffernen Druckplatte nach dem Kennzeichen des Anspruches 1 durchzuführen. Durch die zusätzlichen Durchlaßerweiterungen für die beiden Nuten-Feder-Stäbe würden die schrägen Führungsflächen, die beidseitig der Vertiefungen und der zum Durchstecken der Radialfinger vorgesehenen Erweiterungen angeordnet sind, unterbrochen, so daß ein zwangsläufiges Hineingleiten der Radialfinger entweder in die Durchlaßerweiterungen oder in die Vertiefungen nicht mehr gesichert wäre.

Durch die Ausgestaltung der Erfindung nach Anspruch 3 wird dieser Nachteil beseitigt.

Dabei bildet die Ausgestaltung der Erfindung gemäß Anspruch 4 eine besonders einfache Drehsicherung zwischen dem Führungsrohr und dem Kupplungsrohr bzw. dem Kupplungsrohr und dem Gewinderohr, die zudem noch gute Führungseigenschaften zwischen dem Kupplungsrohr und dem Führungsrohr bzw. Gewinderohr aufgrund der zylindrischen Form zuläßt.

Durch die Ausgestaltung der Erfindung gemäß Anspruch 5 kann auf einfache Weise ein vollständiges axiales Herausschieben des Kupplungsrohres aus dem Führungsrohr bzw. des Gewinderohres aus dem Kupplungsrohr verhindert werden bzw. wird eine bei normaler Handhabung unlösbare Dauerverbindung gewährleistet. Am einfachsten lassen sich die Drehsicherungsstege nach der in Anspruch 6 angegebenen Weise erzeugen.

Eine sehr wichtige Ausgestaltung der Erfindung ist Gegenstand des Anspruches 7, weil dadurch sichergestellt wird, daß durch die Gewindespindel bzw. den Gewindeeingriff zwischen Gewindespindel und Gewinderohr keine axiale Spannkraft auf die Drehsicherungsstege ausgeübt werden kann, die zu einer Beschädigung der formschlüssigen Kupplungsverbindungen führen könnte. Durch die Ausgestaltung gemäß Anspruch 7 ist nämlich sichergestellt, daß der Gewindeeingriff zwischen dem Gewinderohr und der Gewindespindel aufgehoben ist, wenn das Gewinderohr seinen größtmöglichen axialen Abstand vom Führungsrohr einnimmt, den das Kupplungsrohr zuläßt.

Durch die Ausgestaltung der Erfindung nach Anspruch 8 ist es möglich, den maximalen Spannhub auf annähernd doppelte Gewindespindellänge zu vergrößern bzw. bei gleichem maximalem Spannhub die Spindellänge auf etwa die Hälfte zu verkürzen, so daß sie wenn das Gewinderohr maximal in das Führungsrohr eingefahren ist, stirnseitig nicht aus dem Gewindrohr herausragt.

Während durch die Ausgestaltung Anspruch 9 sichergestellt ist, daß die Gewindeeingriffe zwischen der Gewindespindel und der Hohlspindel bzw. zwischen der Hohlspindel und dem Gewinderohr sich nicht ungewollt lösen, bietet die Ausgestaltung der Erfindung nach Anspruch 10 die Möglichkeit im Bedarfsfall unter erhöhter Kraftanwendung z.B. die Gewindespindel vollständig aus der Hohlspindel herauszuschrauben.

Zweckmäßig ist es dabei auch, in analoger Anwendung der Merkmale des Anspruches 7 sicherzustellen, daß durch die beiden Gewindeingriffe keine axialen Schubkräfte bzw. Spannkräfte auf die auch hier am Führungsrohr und am Kupplungsrohr vorhandenen Drehsicherungsstege ausgeübt werden können; was durch entsprechende Längenverhältnisse erreicht werden kann.

Um auch bei einer möglichst kompakten und zugleich leichten Bauweise des Federnspanners, die sich auch durch geringe Wanddicken, insbesondere des Führungs- und Kupplungsrohres auszeichnet, eine hohe Verdrehsicherheit zwischen dem Führungsrohr und dem Gewinderohr sicherzustellen, sind die Ausgestaltungen der Erfindungen nach den Ansprüchen 12 und/oder 13 vorgesehen. Durch sie wird aber zugleich, insbesondere in Kombination mit dem Merkmalen der Ansprüche 14 bis 18, auch eine einfachere Montage und Demontage des Federnspanners ermöglicht.

Durch die gemäß den Ansprüchen 19 bis 21 vorgesehene Drehmoments-Überlastkupplung kann mit ausreichender Zuverlässigkeit eine Überbelastung der Gewindespindel verhindert und somit auch eine weitere Verringerung der Unfallgefahr erreicht werden.

Anhand der Zeichnung werden nun im folgenden Ausführungsbeispiele der Erfindung näher erläutert. Es zeigt:

Fig. 1      eine erste Ausführungsform eines Federnspanners in perspektivischer Explosionsdarstellung;

Fig. 2      den Randbereich der Durchstecköffnung der spindelkopffernen Druckplatte in Draufsicht;

Fig. 3      eine Schnittansicht III-III aus Fig. 2;

Fig. 4      einen Radialfinger des Gewinderohres in Seitenansicht;

Fig. 5      den Federnspanner der Fig. 1 in Schnittansicht ohne die beiden Druckplatten;

Fig. 6      einen Schnitt VI-VI aus Fig. 5;

| Fig. 7 | den Federnspanner der Fig. 1 und 5 ohne die beiden Druckplatten bei vollständig ausgefahrenem Gewinderohr in teilweise geschnittener Seitenansicht; |
| Fig. 8 | den Federnspanner der Fig. 1 bis 7 in Seitenansicht bei vollständig eingefahrenem Gewinderohr und geringstmöglichem Axialabstand der beiden Druckplatten in Spannstellung; |
| Fig. 9 | den in Fig. 1 bis 8 dargestellten Federnspanner in Anwendung bei einer Schraubenfeder in perspektivischer Darstellung; |
| Fig. 10 | den Federnspanner der Fig. 1 bis 8 mit einer gespannten Feder in Schnittdarstellung; |
| Fig. 11 | ein anderes Anwendungsbeispiel des in Fig. 1 bis 8 dargestellten Federnspanners bei einer teilweise in einen sogenannten Dom ragenden Druckfeder eines Kraftfahrzeuges; |
| Fig. 12 | eine andere Ausführungsform eines Federnspanners ohne die beiden Druckplatten in perspektivischer Seitenansicht; |
| Fig. 13 | den Federnspanner der Fig. 12 im Schnitt bei teilweise ausgefahrenem Gewinderohr; |
| Fig. 14 | in wenig vergrößerter Darstellung den Federnspanner der Fig. 12 und 13 bei vollständig eingefahrenem Gewinderohr ebenfalls ohne die beiden Druckplatten und |
| Fig. 15 | einen Schnitt XV-XV aus Fig. 14 in vergrößerter Darstellung; |
| Fig. 16 | eine weitere Ausführungsform des Federnspanners in perspektivischer Seitenansicht; |
| Fig. 17 | den Federnspanner der Fig. 16 im Längsschnitt im Zustand seiner größten Länge; |
| Fig. 18 | einen Längsschnitt des Federnspanners der Fig. 16 und 17 im Zustand seiner kürzesten Länge; |
| Fig. 19 | den spindelkopfseitigen Abschnitt des Federnspanners mit einer Drehmoments-Überlastkupplung zwischen einem Schlüsselkopfprofil und der Gewindespindel im Schnitt; |
| Fig. 20 | eine gegenüber der Fig. 19 veränderte Lagerung des Spindelkopfes in der Lagermuffe des Führungsrohres im Schnitt; |
| Fig. 21 | eine Stirnansicht der Lagermuffe des leeren Führungsrohres; |
| Fig. 22 | den spindelkopfseitigen Endabschnitt der Gewindespindel in der Ausführungsform der Fig. 19 und 20. |

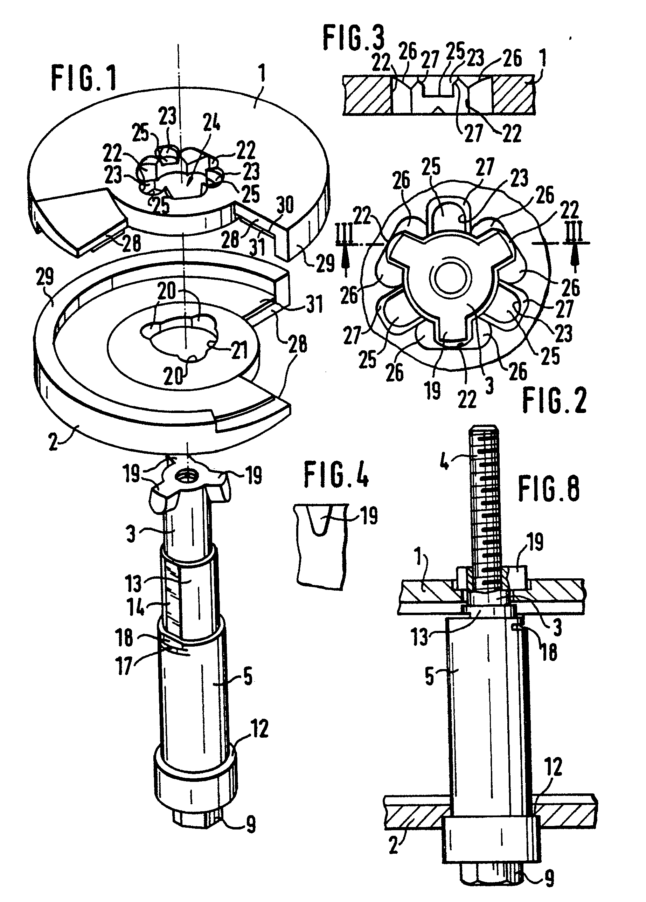

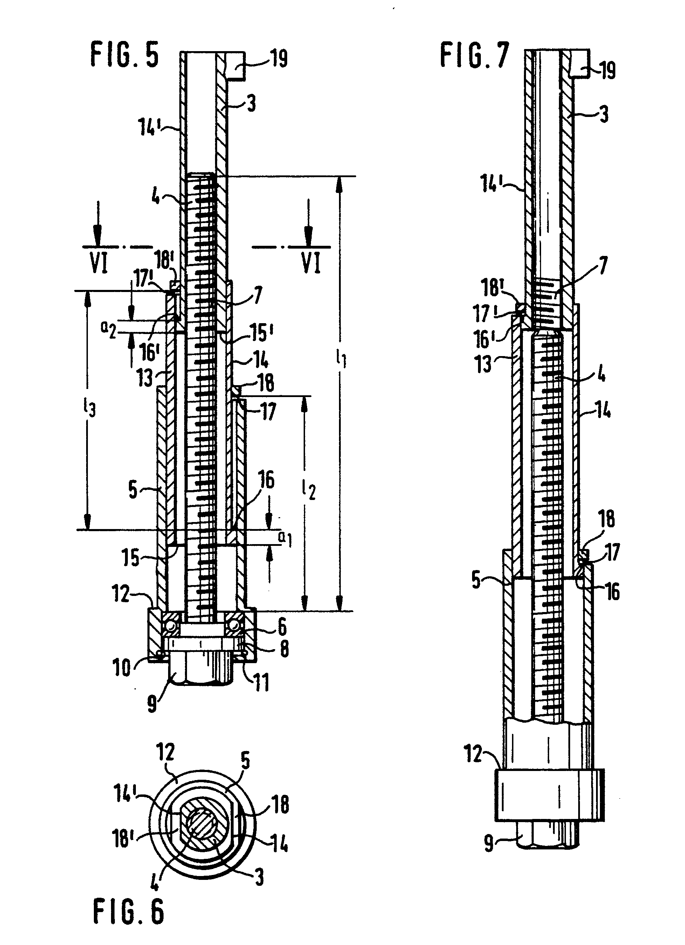

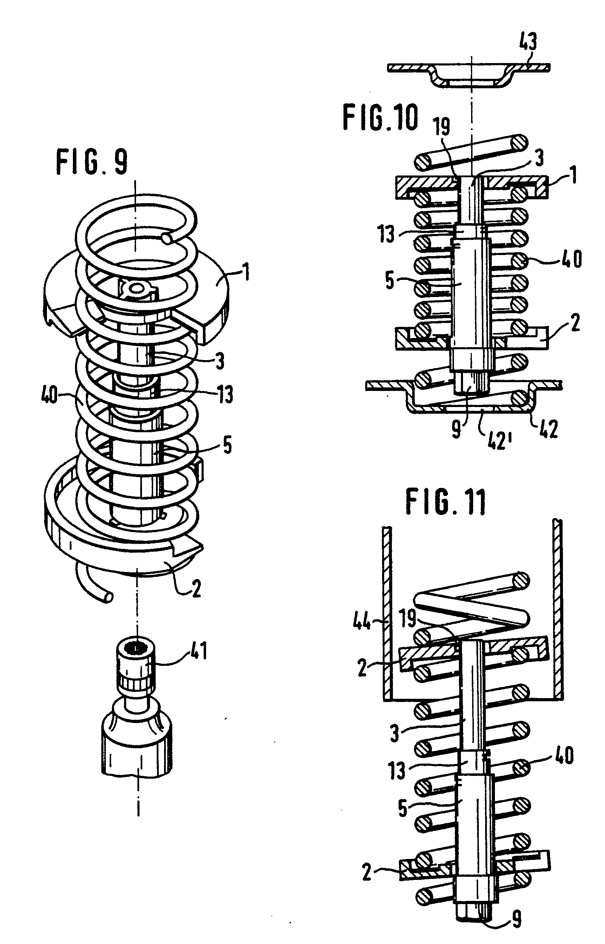

Der in den Fig. 1 bis einschließlich Fig. 8 dargestellte Federnspanner besteht im wesentlichen aus zwei tellerartigen Druckplatten 1 und 2, einem zylindrischen Gewinderohr 3, einer in das Gewinderohr 3 einschraubbaren Gewindespindel 4 und aus einem zylindrischen Führungsrohr 5, in dem die Gewindespindel 4 mittels eines Axialdrucklagers 6 drehbar gelagert ist. Das Gewinderohr weist an seinem unteren dem Axialdrucklager 6 zugekehrten Endabschnitt ein Innengewinde 7 auf (siehe Fig. 5 und 7), das sich etwa über ein Viertel der Gesamtlänge des Gewinderohres 3 erstreckt, und in welches die Gewindespindel 4 einschraubbar ist. Die Gewindespindel ist an ihrem unteren Ende mit einem sich auf dem Axialdrucklager 6 abstützenden Flanschring 8 und mit einem axial aus dem Führungsrohr 5 vorstehenden, ein Schlüsselprofil aufweisenden Spindelkopf 9 versehen und durch einen in einer Ringnut 10 des Führungsrohres 5 sitzenden Sicherungsring 11 gegen Axialverschiebung im Führungsrohr 5 gesichert. In der Nähe des Spindelkopfes 9 ist das Führungsrohr 5 mit einer radial vorspingenden, ringschulterartigen Auflagefläche 12 versehen, auf welcher, wie nachstehend noch näher erläutert wird, die untere, spindelkopfseitige Druckplatte 2 aufgesetzt werden kann.

Wie am besten aus den Fig. 5 und 7 erkennbar ist, ist bei diesem Federnspanner das Führungsrohr 5 etwa halb so lang wie die Gewindespindel 4. Zwischen dem zylindrischen Führungsrohr 5 und dem ebenfalls zylindrischen Gewinderohr 3 ist ein ebenfalls zylindrisches Kupplungsrohr 13 angeordnet, welches dazu dient, das Führungsrohr 5 und das Gewinderohr 3 drehfest miteinander zu verbinden, so daß das eine gegenüber dem anderen nicht verdreht werden kann. Dazu ist das Kupplungsrohr 13 auf seinem Umfang mit einer ebenen, sich im wesentlichen über die ganze Länge erstreckenden Drehsicherungsfläche 14 versehen, die in einem Abstand $a_1$ von der unteren, d.h. im Führungsrohr 5 steckenden Stirnfläche 15 an einer die Form eines Kreisausschnittes aufweisenden Anschlagfläche 16 endet. Das Führungsrohr 5 ist an seinem oberen Ende mit einem durch einen querverlaufenden Einschnitt 17 freigeschnitten und radial nach innen geprägten, flach an der Drehsicherungsfläche 14 anliegenden Drehsicherungssteg 18 versehen, der nicht nur aufgrund seines formschlüssigen Anliegens an der Drehsicherungsfläche 14 eine Verdrehung des Kupplungsrohres 13 im Führungsrohr 5 verhindert, sondern auch verhindert. daß das Kupplungsrohr 13 vollständig aus dem Führungsrohr 5 herausgezogen werden kann, indem die Anschlagflächen 16 an diesem Drehsicherungssteg 18 anschlägt. In analoger Weise ist auch eine Verdrehsicherung zwischen dem Kupplungsrohr 13 und dem Gewinderohr 3 vorgesehen, indem das Gewinderohr 3 ebenfalls mit einer Drehsicherungsfläche 14' versehen ist, an welcher ein am oberen Ende des Kupplungsrohres 13 angeordneter, durch einen querverlaufenden Einschnitt 17' freigeschnittener und nach innen geprägter Drehsicherungssteg 18' formschlüssig anliegt. Auch die Drehsicherungsfläche 14' erstreckt sich im wesentlichen über die gesamte Länge des Gewinderohres 3 und endet in einem Abstand $a_2$ von der unteren Stirnfläche 15' des Gewinderohres 3 an einer Anschlagfläche 16', welche in Draufsicht die Form eines Kreisabschnittes aufweist. Auch hierbei verhindert der Drehsicherungssteg 18' ein vollständiges Herausziehen des Gewinderohres 3 aus dem Kupplungsrohr 13, indem die Anschlagfläche 16' am Drehsicherungssteg 18' zur Anlage kommt.

Wie am besten aus Fig. 7 erkennbar ist, ist die Länge des Kupplungsrohres 13, genauer gesagt, der Axialabstand $1_3$ zwischen der Anschlagfläche 16 einerseits und dem Drehsicherungssteg 18' andererseits so gewählt, d.h. auf die Länge der Gewindespindel 4 so abgestimmt, daß die Gewindespindel 4 beim Ausfahren des Gewinderohres 3 das Innengewinde 7 des verläßt, bevor die Anschlagflächen 16 und 16' gleichzeitig an den Drehsicherungsstegen 18 bzw. 18' zur Anlage kommen. Dadurch ist sichergestellt, daß diese Drehsicherungsstege 18 und 18' durch den Gewindeeingriff zwischen der Gewindespindel 4 und dem Gewinderohr 3 keinen axialen Schub- oder Zugkräften ausgesetzt werden können. Um das zu gewährleisten, muß zwischen der Spindellänge $1_1$, der maximalen Hubbewegung $1_2$, welche das Kupplungsrohr 13 innerhalb des Führungsrohres 5 ausführen kann, dem Axialabstand $1_3$, welchen die Anschlagfläche 16 vom gegenüberliegenden Drehsicherungssteg 18' hat und dem Abstand, den der Gewindeanfang des Innengewindes 7 des Gewinderohres 3 von der Anschlagfläche 16' aufweist, folgende Bedingung erfüllt sein:

$1_1 = 1_2 - a_1 + 1_3 - a_2$, wobei im vorliegenden Fall der Abstand der Anschlagfläche 16' von dem in der Ebene der Stirnfläche 15' liegenden Gewindeanfang des Innengewindes 7 zufällig gleich $a_2$ ist. Es versteht sich, daß dann, wenn der Gewindeanfang des Innengewindes 7 oberhalb der Anschlagfläche 16' liegt, sich das Vorzeichen von $a_2$ ändert.

Wie aus Fig. 1 ersichtlich ist, weist die Druckplatte 2, die bei Gebrauch des Federspanners auf der Auflagefläche 12 des Führungsrohres 5 aufliegt und sich dann in Spindelkopfnähe befindet, als Durchsrecköffnung eine Zentralbohrung 21 auf, deren Durchmesser nur wenig größer ist als der Außendurchmesser des Führungsrohres 5, der aber kleiner ist als der Außendurchmesser der Auflagefläche 12. Diese Zentralbohrung 21 ist zudem mit drei jeweils in Winkelabständen von 120° voneinander angeordneten Erweiterungen 20 versehen, durch welche drei Radialfinger 19 frei hindurchführbar sind, die am oberen, d.h. spindelkopffernen Ende des Gewinderohres 3 sternförmig, d.h. ebenfalls in Winkelabständen von 120° angeordnet sind. Diese Radialfinger 19 sind zur Herstellung einer verdrehsicheren Zugverbindung zwischen der Druckplatte 1 und dem Gewinderohr 3 vorgesehen. Zu diesem Zweck ist auch die Druckplatte 1 mit einer zentralen Durchstecköffnung 24 versehen, die im Ausführungsbeispiel die Grundform einer zylindrischen Bohrung aufweist, die aber beispielsweise auch die Grundform eines gleichseitigen Dreiecks mit einer auf den Durchmesser des Gewinderohres 3 abgestimmten Weite haben könnte. Als Durchlässe für die Radialfinger 19 weist diese Durchstecköffnung 24 ähnlich wie die Zentralbohrung 21 der Druckplatte 2 axial durchgehende, radiale Erweiterungen 22 auf, deren Winkelabstände zueinander ebenfalls jeweils 120° betragen, und deren Breite und radiale Weite jeweils etwas größer sind als die entsprechenden Maße der Radialfinger 19. Auf der in den Fig. 1 und 2 sichtbaren Außenseite der Druckplatte 1 sind im Randbereich der Durchstecköffnung 24 jeweils in der Mitte zwischen zwei Erweiterungen 22 axiale Vertiefungen 23 mit planebenen Auflageflächen 25 angeordnet, welche zur formschlüssigen Aufnahme der Radialfinger 19 des Gewinderohres 3 und somit zur Herstellung einer drehfesten Zugverbindung zwischen der Druckplatte 1 und dem Gewinderohr 3 dienen. Dabei ist es zur Beseitigung von Unfallgefahren wichtig. Maßnahmen vorzusehen, die sicherstellen, daß die Radialfinger 19 zur Herstellung einer Zugverbindung nirgendwo anders eine Auflage finden, als auf den Auflageflächen 25 der axialen Vertiefungen 23. Um dies zu erreichen, sind sowohl die Ränder der axialen Vertiefungen 23 als auch die Ränder der radialen Erweiterungen 22 auf der Außenseite jeweils derart schrägflächig angesenkt, daß konische Leitflächen 26 und 27 entstehen, die zumindest im Radienbereich der Radialfinger 19 aneinander heranreichen oder sich überschneiden, so daß in diesem Bereich für die Radialfinger keine planebene Auflagefläche außerhalb der Vertiefungen 23 vorhanden ist.

Außerdem sind die Radialfinger 19, wie die Seitenansicht der Fig. 4 zeigt, im wesentlichen keilförmig ausgebildet, so daß sie nur die beiden Möglichkeiten haben, entweder in eine der Vertiefungen 23 oder aber in eine axial durchgehende Erweiterung zu gleiten, wenn sie von außen axial gegen die Druckplatte 1 bewegt werden.

Im übrigen sind die beiden Druckplatten 1 und 2 im wesentlichen spiegelbildlich gleich ausgebildet. Beide haben die Grundform einer kreisförmigen Scheibe mit jeweils einem ringsegmentartigen sich etwa über 70° - 90° erstreckenden Ausschnitt 28, der zum Durchführen eines Federwindungsabschnittes dient. Ihre jeweils auf den voneinander abgekehrten Seiten angeordneten Außenflächen sind glatt. Auf den einander zugekehrten Innenseiten sind jeweils innerhalb eines am äußeren Rand umlaufenden Ringbundes 29 leicht schraubenartig gewundene Ringflächen 30 vorgesehen, die jeweils mit einem Reibbelag 31 in Form eines aufgeklebten oder aufvulkanisierten Gummibandes versehen sind.

Die Handhabung und Anwendung eines solchen Federnspanners ist nachstehend anhand der Fig. 9, 10 und 11 näher erläutert. Fig. 9 zeigt bereits aus einem Kraftfahrzeug ausgebaute oder noch nicht eingebaute Schraubenfeder 40, in welche der vorstehend beschriebene Federspanner bereits spannbereit eingesetzt ist. Dabei erfolgte das Einsetzen in der Weise, daß zunächst die Druckplatten 1 und 2 jeweils separat in der dargestellten Weise zwischen zwei Windungsgänge der Schraubenfeder 40 von der Seite her eingesetzt wurden, bis sie eine zu den Federwindungen etwa konzentrische Lage eingenommen haben. Dann wurde von unten her das aus dem Gewinderohr 3 der Gewindespindel 4, dem Führungsrohr 5 und dem Kupplungsrohr 13 bestehende Spannaggregat in axialer Richtung zunächst durch die untere Druckplatte 2 und dann durch die obere Druckplatte 1 hindurchgesteckt, um die Radialfinger 19 in die Vertiefungen 23 der oberen Druckplatte 1 zu setzen. In der so erlangten Lage kann die Gewindespindel 4 mittels eines mit einem Schlüsselkopf 41 versehenen Drehwerkzeuges, das auf den Spindelkopf 9 aufgesetzt wird, in Drehung versetzt werden, so daß sich eine Verkürzung des Plattenabstandes ergibt und dabei zwischen den Druckplatten 1 und 2 befindlichen Federwindungen der Schraubenfeder 40 zusammengedrückt werden. Je nach der Anzahl der zwischen den Druckplatten 1 und 2 liegenden Federwindungen können diese maximal so weit zusammengepreßt werden, daß sie sich berühren. Dann kann die Schraubenfeder 40 beispielsweise in der in Fig. 10 dargestellten Weise in einem Kraftfahrzeug zwischen einer unteren Stützplatte 42 und einem oberen Stützteller 43 eingesetzt und durch entsprechendes Drehen der Gewindespindel 4 entspannt werden bis die außerhalb der oberen Druckplatte 1 liegende Windung der Schraubenfeder 40 am Stützteller 43 anliegt und die Druckplatten 1 und 2 keinem Federdruck mehr ausgesetzt sind. Dann wird durch weiteres Drehen der Gewindespindel 4 das Gewinderohr 3 so weit nach oben geschoben, daß die Radialfinger 19 aus den Vertiefungen 23 herausgehoben sind und nach einer Drehung des Gewinderohres 3 um 60° durch die Druckplatten 1 und 2 nach unten herausgezogen werden können. Danach werden dann die beiden Druckplatten 1 und 2 seitlich aus der Schraubenfeder 40 herausgenommen. Es ist in Fig. 10 erkennbar, daß die Stützplatte 42 mit einer Zentralöffnung 42' versehen ist, damit das Spannaggregat, d.h. das Führungsrohr 5 mit dem Gewinderohr 3 nach unten durch die Stützpfanne 42 hindurch entnommen werden kann.

Bei dem in Fig. 11 dargestellten Anwendungsbeispiel ragt die Schraubenfeder 40, wenn sie entspannt ist, in einen im Fahrzeug vorhandenen Dom 44 hinein. Während das Entnehmen des Spannaggregates aus den beiden Druckplatten 1 und 2 auch in der vorbeschriebenen Weise erfolgen kann und auch die untere Druckplatte 2 ohne weiteres seitlich aus der Schraubenfeder herausgezogen werden kann, ist es erforderlich, die obere Druckplatte 1 den Windungen entlang nach unten zu drehen, bis sie den Dom 44 verlassen hat und ebenfalls seitlich herausgenommen werden kann. Es ist insbesondere aus Fig. 8 und 10 erkennbar, daß der Abstand zwischen den beiden Druckplatten 1 und 2 beim Spannen einer Schraubenfeder so weit verkürzt werden kann, bis der untere Rand der Durchstecköffnung 24 auf oberen Stirnseite 32 des Führungsrohres 5 aufsitzt.

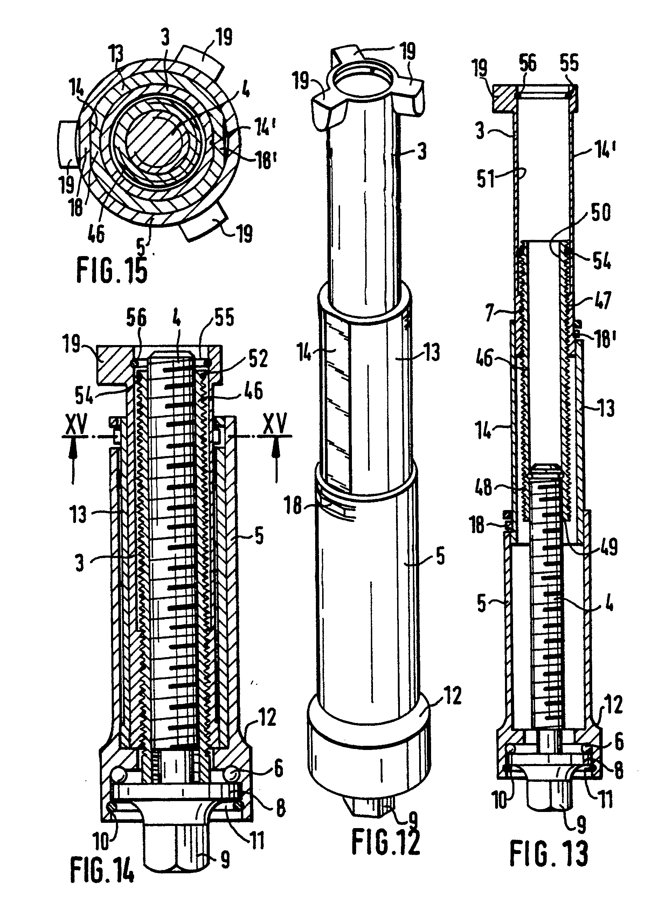

Während es bei manchen Kraftfahrzeugtypen hinderlich ist, daß beim vorstehend beschriebenen Federnspanner die Gewindespindel 4 um ein Maß aus der oberen Druckplatte 1 herausragt, welches zumindest annähernd der Länge des Führungsrohres 5 und somit der halben Länge der Gewindespindel 4 entspricht, ist in den Fig. 12 bis 15 ein Federnspanner mit einem Spannaggregat für die beiden Druckplatten 1 und 2 vorgesehen, das diesen Nachteil nicht aufweist. Bei diesem Spannaggregat, das ebenfalls aus dem Führungsrohr 5, dem Gewinderohr 3 mit den drei Radialfingern 19 und dem Kupplungsrohr 13 besteht, ist die Gewindespindel 4 nur um das Maß länger, als das Führungsrohr 5, um welches das Gewinderohr 3, wenn es maximal in das Führungsrohr 5 eingefahren ist, aus diesem in axialer Richtung herausragt. Diese Funktionslage ist in Fig. 14 dargestellt. Während das Führungsrohr 5 durch das Kupplungsrohr 13 in der gleichen Weise mit dem Gewinderohr 3 in Verbindung steht wie beim vorstehend anhand der Fig. 1 bis 8 beschriebenen Federnspanner, ist zwischen der Gewindespindel 4 und dem an seinem unteren Endabschnitt mit dem Innengewinde 7 versehenen Gewinderohr 3 eine Hohlspindel 46 angeordnet. Diese Hohlspindel 46 hat etwa die gleiche axiale Länge wie die Gewindespindel 4, sie ist mit einem sich im wesentlichen über ihre ganze Länge erstreckendes Außengewinde 47 versehen, das mit dem Innengewinde 7 des Gewinderohres 3 in Eingriff steht und sie weist an ihrem unteren Abschnitt ein Innengewinde 48 aufweist, welches sich in axialer Richtung von der unteren Stirnseite 49 her über wenigstens fünf Windungen erstreckt. Oberhalb dieses Innengewindes 48 ist eine zylindrische Bohrung 50 vorgesehen, deren Durchmesser etwas größer ist als der Außendurchmesser der Gewindespindel 4.

Auch der oberhalb des Innengewindes 7 liegende Abschnitt des Gewinderohres 3 ist mit einer zylindrischen Bohrung 51 versehen, deren Durchmesser geringfügig größer ist als der Außendurchmesser der Hohlspindel 46.

Der in die zylindrische Bohrung 50 hineinragende Endabschnitt der Gewindespindel 4 ist mit einer Gewindesicherung 52 z.B. in Form eines in eine Ringnut 53 eingesetzten Kunststoff- oder Gummiringes versehen, dessen Aufgabe es ist, zu verhindern, daß die Gewindespindel 4 ohne weiteres nach unten aus dem Innengewinde 48 der Hohlspindel 46 herausgeschraubt werden kann. Desgleichen ist am oberen Endabschnitt der Hohlspindel 46 eine Gewindesicherung 54 angebracht, die verhindert, daß die Hohlspindel 46 nach unten aus dem Gewinderohr 3 ohne weiteres herausgeschraubt werden kann. In beiden Fällen ist die Gewindesicherung 52 bzw. 54 so angebracht, daß die Axialverschiebung des Gewinderohres 3 auf der Hohlspindel 46 bzw. die Axialverschiebung der Gewindespindel 4 in der Hohlspindel 46 nicht behindert wird.

Durch diese Hohlspindel 46 ist es möglich, den maximalen Spannhub gegenüber der Länge der Gewindespindel 4 erheblich zu vergrößern und zwar um das Maß, um welches das Gewinderohr 3 auf der Hohlspindel 46 selbst verschiebbar ist.

Um zu verhindern, daß die Hohlspindel 46 nach oben aus dem Innengewinde 7 des Gewinderohres 3 herausgeschraubt werden kann, ist am oberen Ende des Gewinderohres 3 in einer Innen-Ringnut 55 ein Sperring 56 angeordnet, durch welchen die Hohlspindel 47 nicht hindruchgeschoben werden kann.

Es liegt auf der Hand, daß durch die Anordnung der Hohlspindel 46 die Durchmesser des Führungsrohres 5, des Kupplungsrohres 13 und des Gewinderohres 3 bei gleichem Durchmesser der Gewindespindel 4 gegenüber dem Ausführungsbeispiel der Fig. 1 bis 8 um die doppelte Wanddicke der Hohlspindel 46 größer sein müssen. Dem gegenüber wird aber der doch wesentlich bedeutendere Vorteil erzielt, daß die Gesamtlänge des Spannaggregates bzw. des Federnspanners in der Ausführungsform der Fig. 12 bis 15, wie die Fig. 14 verdeutlicht, im maximal verkürzten Zustand wesentlich kürzer sein kann, als beim anderen Ausführungsbeispiel, während der maximale Spannhub wesentlich größer ist.

Alle übrigen vorteilhaften Eigenschaften des in den Fig. 1 bis 8 dargestellten Federnspanners können selbstverständlich auch im Ausführungsbeispiel der Fig. 12 bis 15 verwirklicht sein.

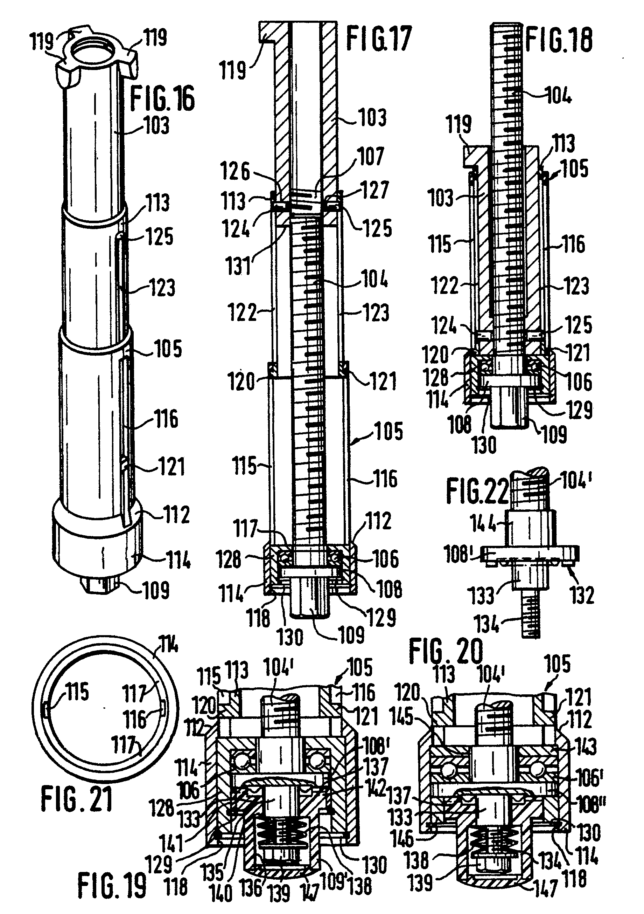

Bei dem in den Fig. 16, 17 und 18 dargestellten Federnspanner, der ebenfalls aus einem Gewinderohr 103 mit drei Radialfingern 119, einem Kupplungsrohr 113 und einem Führungsrohr 105 mit einer Auflagefläche 112 sowie aus einer Gewindespindel 104 mit einem ein Schlüsselprofil aufweisenden Spindelkopf 109 besteht, ist die Verdrehsicherung zwischen dem Führungsrohr 105 und dem Gewinderohr 103 mit anderen Mitteln als bei den vorstehend beschriebenen Ausführungsbeispielen verwirklicht.

Das am unteren Ende mit einer Lagermuffe 114 versehene Führungsrohr 105 ist mit sich diametral gegenüberliegenden, am oberen Ende des Führungsrohres 105 geschlossenen Führungsschlitzen 115 und 116 versehen, die, wie am besten aus den Fig. 17 und 21 ersichtlich ist, offen an einer Ringschulter 117 einer zylindrischen Ausnehmung 118 der Lagermuffe 114 enden. Der Innendurchmesser der Ausnehmung 118 ist dabei mindestens gleich groß wie der Außendurchmesser des Führungsrohres 105 oberhalb der Lagermuffe 114. Das Kupplungsrohr 113 weist an seinem spindelkopfnahen Ende zwei einstückig angeformte Führungsnocken 120, 121 auf, die mit geringem seitlichem Spiel in je einen der Führungschlitze 115 und 116 sind und deren radiale Ausdehnung höchstens gleich groß ist wie die Wanddicke des Führungsrohres 105. Sowohl das Führungsrohr 105 wie auch das Kupplungsrohr 113 ist vollständig zylindrisch, wobei der Außendurchmesser des Kupplungsrohres 113 auf den Innendurchmesser des Führungsrohres 105 so abgestimmt ist, daß eine gute teleskopartige Führung zwischen den beiden Rohren erreicht wird. Das Einführen des Kupplungsrohres 113 in das Führungsrohr 105 geschieht in der Weise, daß das Kupplungsrohr 113 von unten durch die zylindrische Ausnehmung 118 in das Führungsrohr 105 eingeschoben wird, so daß die beiden unten offenen Führungsschlitze 115 die beiden Führungsnokken 120 und 121 aufnehmen. Auch das Kupplungsrohr 113 ist mit zwei sich diametral gegenüberliegenden und axial verlaufenden Führungsschlitzen 122, 123 versehen, die jedoch sowohl am oberen wie auch am unteren Ende des Kupplungsrohres 113 geschlossen sind. Um eine möglichst kompakte und leichte Bauweise zu erreichen, sind die Wanddicken sowohl des Führungsrohres 105 als auch des Kupplungsrohres 113 gering gehalten. Sie betragen etwa 2 - 3 mm. Dagegen ist das an seinem spindelkopfseitigen Endabschnitt mit einem Innengewinde 107 versehene und auf Zug beanspruchte Gewinderohr 103 mit einer größeren Wanddicke von etwa 5 - 6 mm versehen. Diese Wanddicke des Gewinderohres 103 reicht aus, um darin zwei Führungsstifte 124 und 125 zu befestigen, welche in koaxiale Querbohrungen 126 des unteren, mit dem Innengewinde 107 versehenen Endabschnittes des Gewinderohres 103 eingepreßt sind. Als Führungsstifte 124, 125 werden zwei ineinander gepreßte Schwerspannstifte aus gerolltem Federstahlblech verwendet, welche durch die Führungsschlitze 122 und 123 hindruch in die Querbohrungen 126 bzw. 127 eingetrieben werden, so daß sie nur noch höchstens um die Wanddicke des Kupplungsrohres 113 aus der Umfangsfläche des Gewinderohres 103 herausragen und so eine drehsichere Verbindung zwischen dem Gewinderohr 103 und dem Kupplungsrohr 113 herstellen. Dabei ist die Länge der Führungsstifte 124 und 125 so gewählt, daß sie einerseits nicht in das Innengewinde 107 des Gewinderohres 103 eingreifen, wenn sie um die Wanddicke des Kupplungsrohres 113 aus der Umfangsfläche des Gewinderohres 103 herausragen. Gleichzeitig ergibt sich durch diese Anordnung und durch die gewählte Länge der Kupplungsstifte 124 und 125 die Möglichkeit, diese, wenn die Gewindespindel 104 zumindest so weit, wie in der Fig. 17 dargestellt ist, aus dem Innengewinde 107 herausgeschraubt ist, mittels eines entsprechenden Durchschlagdornes nach innen aus den Querbohrungen 126 und 127 herauszuschlagen, wenn das Gewinderohr 103 vom Kupplungsrohr 113 gelöst werden soll.

Bei dem in den Fig. 17 und 18 dargestellten Ausführugnsbeispiel ist die Gewindespindel 104 in gleicher Weise wie bei den vorstehend beschriebenen Ausführungsbeispielen der Fig. 1 bis 15 einstückig mit einem Flanschring 108 versehen, der auf einem Axiallager 106 aufliegt und an den sich das Schlüsselprofil des Spindelkopfes 109 einstückig anschließt. Um den Durchmesser sowohl des Flanschringes 108 als auch des Axiallagers 106 nicht so groß wählen zu müssen wie den Innendurchmesser der Ausnehmung 118 der Lagermuffe 114, ist in die Ausnehmung 118 eine topfartige zylindrische Lagerhülse 128 eingesetzt, die auf der Ringschulter 117 aufsitzt und in welcher sowohl das Axiallager 106 als auch der Flanschring 108 aufgenommen und durch einen Sicherungsring 129 in axialer Richtung gesichert sind. Die lose in der Ausnehmung 118 der Lagermuffe 114 sitzende Lagerhülse 128, die leicht einsetzbar und herausnehmbar sein soll, ist mittels eines Sicherungsringes 130 axial in der Ausnehmung 118 fixiert. Durch die Lagerhülse 128 werden die beiden Führungsschlitze 115 und 116 des Führungsrohres 105 geschlossen, so daß das Kupplungsrohr 113 bei eingesetzter Lagerhülse 128 nicht nach unten herausgeschoben werden kann.

Aus Fig. 18 ist erkennbar, daß auch bei diesem Federnspanner das Kupplungsrohr 113 und das Gewinderohr 103 teleskopartig ineinander und in das Führungsrohr 105 geschoben werden können, bis die innere Stirnfläche 131 des Gewinderohres 103 auf der Lagerhülse 128 aufsitzt. In dieser Position ist der axiale Abstand der Auflagefläche 112 von den Radialfingern 119 annähernd gleich groß wie der Abstand der Radialfinger 119 von der unteren Stirnfläche 131 des Gewinderohres 103. Dieser Abstand entspricht etwa einem Drittel des in Fig. 17 dargestellten Maximalabstandes zwischen der Auflagefläche 112 und den Radialfingern 119, der dann erreicht ist, wenn die Führungsnocken 120 und 121 an den oberen Enden der Führungsschlitze 115 und 116 und die Führungsstifte 124 und 125 an den oberen Enden der Führungsschlitze 122 und 123 anstehen, das Gewinderohr 103 also maximal ausgefahren ist.

Um zu verhindern, daß in diesen in den Fig. 17 und 18 dargestellten Extremlagen des Gewinderohres 103 in bezug auf das Führungsrohr 105 ein Überdrehen der Gewindespindel und somit eine Gewindebeschädigung eintreten kann, ist gemäß den Fig. 19. 20 und 21 eine Gewindespindel 104′ vorgesehen, deren Schlüsselprofilkopf 109′ durch eine Drehmoments-Überlastkupplung mit ihr verbunden ist. Gewindespindel 104′ weist deshalb einen Flanschring 108′ auf, der auf der nach außen gerichteten Stirnseite mit einem Rastzahnkranz 132 versehen ist, und außerhalb des Flanschringes 108′ einen zylindrischen Führungsansatz 133, an den sich ein Gewindezapfen 134 anschließt. Der Schlüsselprofilkopf 109′ ist mit einer zentralen im Durchmesser auf den Führungsansatz 133 abgestimmten Bohrung 135 und mit einer im Durchmesser erweiterten zylindrischen Ausnehmung 136 versehen, die durch eine Kunststoffkappe 137 verschließbar ist. Außerdem ist der Schlüsselprofilkopf 109′ mit einem rastend in den Rastzahnkranz 132 eingreifenden Gegen-Rastzahnkranz 137 versehen, der durch ein Tellerfedernpaket 138, das auf dem Gewindezapfen 134 zwischen einer Gewindemutter 139 und der Ringschulter 140 der Ausnehmung 136 angeordnet ist, in Eingriff gehalten wird. Bei der Ausführungsform der Fig. 19 haben der Flanschring 108′ und das Axiallager 106 den gleichen Durchmesser wie beim Ausführungsbeispiel der Fig. 17 und 18, und sie sind in gleicher Weise in einer Lagerhülse 128 aufgenommen. Zur axialen Lagesicherung des Flanschringes 108′ ist jedoch eine Distanzbuchse 141 erforderlich, die einem im Durchmesser vergrößerten Ansatz 142 des Schlüsselprofilkopfes 109′ in axialer Richtung überbrückt, damit der Sicherungsring 129 ohne weiteres eingesetzt und herausgenommen werden kann. Auch hier ist die Lagerhülse 128 durch einen Sicherungsring 130 in der Ausnehmung 118 der Lagermuffe 114 gesichert.

Beim Ausführungsbeispiel der Fig. 20 ist statt der Lagerhülse 128 lediglich eine im Durchmesser an die Ausnehmung 118 angepaßte Lagerscheibe 143 vorgesehen, auf welcher ein Axiallager 106' aufliegt, an welchem sich ein Flanschring 108" abstützt. Sowohl das Axiallager 106' als auch der Flanschring 108" sind in diesem Falle an den Innendurchmesser der Ausnehmung 118 angepaßt, was aber nicht unbedingt erforderlich ist. Dadurch, daß die Gewindespindel 104' durch einen zylindrischen Ansatz 144 in der zentralen Bohrung 145 der Lagescheibe 143 zentriert geführt werden kann, bedürfen das ebenfalls am zylindrischen Ansatz 144 geführte Axiallager 106' und der Flanschring 108" keiner Führung an der Innenfläche der Ausnehmung 118. Hingegen ist auch in diesem Falle eine Distanzbuchse 146 zur Sicherung der Axiallage der Gewinderspindel 104' erforderlich. Diese Distanzbuchse 146 sitzt auf dem Flanschring 108" auf und ist durch den Sicherrungsring 130 in der Ausnehmung 118 fixiert. Alle übrigen Bauteile sind in gleicher Anordnung wie beim Ausführungsbeispiel der Fig. 19 vorgesehen.

Durch das Vorsehen der vorstehend beschriebenen Drehmoments-Überlastkupplung, die sich mit Hilfe Spannmutter 139 und des Federpakets 138 aud verschiedene Grenzwerte einstellen läßt, ist sichergestellt, daß in den beiden in den Fig. 17 und 18 dargestellten Endpositionen des Gewinderohres 103 in bezug auf das Führungsrohr 105 keine Überdrehungen der Gewindespindel und somit keine Beschädigungen an den miteinander in Eingriff stehenden Gewinden eintreten können. Wenn in einer der beiden Endpositionen des Gewinderohres 103 der Schlüsselprofilkopf 109' weiter gedreht wird, so findet ein Verdrehen des Schlüsselprofilkopfes 109' relativ zu der Gewindespindel 104' statt, indem die beiden miteinander in Eingriff stehenden Rastzahnkränze 132 und 137 unter gleichzeitiger axialer Verschiebung des Schlüsselprofilkopfes 109' und Überwindung der axialen Federkräfte des Tellerfederpakets 138 gegenseitig ausrasten. Damit diese Überlastkupplung in beiden Drehrichtungen gleichmäßig wirksam ist, sind die beiden Rastzahnkränze 132, 137 jeweils mit symmetrischen Zahnprofilen versehen.

Bei der beschriebenen Art der drehsicheren Verbindung zwischen dem Führungsrohr 105 und dem Gewinderohr 103 ist auch bei geringen Wanddicken sowohl des Führungsrohres 105 als auch des Kupplungsrohres 113 eine hohe Festigkeit erzielen, weil insbesondere die Führungsnocken 115, 116 des Kupplungsrohres 113 einstückig an diesen angeformt, d.h. aus dem vollen Material herausgearbeitet werden können, und für die Führungsstifte 124, 125 am Gewinderohr 103 ohnehin eine ausreichende Wanddicke für einen stabilen Preßsitz vorhanden ist. Auch das Erfordernis der leichten Montage und Demontage ist auf vorteilhafte Weise erfüllt.

Aus Stabilitätsgründen ist es zweckmäßig, die Führungsnocken 120, 121 gegenüber den Führungsschlitzen 122, 123 am Kupplungsrohr jeweils, z.B. um 90°, versetzt anzuordnen.

## Ansprüche

1. Federnspanner für große Schraubenfedern, insbesondere für Kraftfahrzeugachsfedern, bestehend aus zwei losen, tellerartigen Druckplatten (1,2) mit jeweils einer zentralen Durchstecköffnung (24), sowie aus einer einen Spindelkopf (9) mit Schlüsselprofil aufweisenden Gewindespindel (4), die mittels eines Axialdrucklagers (6) in einem zylindrischen Führungsrohr (5) drehbar gelagert ist, welches zur Abstützung der spindelkopfseitigen Druckplatte (1) eine radiale Auflagefläche (12) aufweist, und aus einem zum Einschrauben der Gewindespindel mit einem Innengewinde versehenen, zylindrischen Gewinderohr (3), das durch formschlüssige Führungsmittel (13) mit dem Führungsrohr axial verschiebbar in drehfester Verbindung steht und das am Umfang seines spindelkopffernen Endabschnittes mit Radialfingern (19,119) versehen ist, durch deren Eingriff in Vertiefungen der spindelkopffernen Druckplatte, welche im Randbereich von deren Durchsteicköffnung neben radialen Erweiterungen, welche Durchlässe für die Radialfinger bilden, außenseitig angeordnet sind, das Gewinderohr mit der Druckplatte in drehfeste Zugverbindung bringbar ist,
**dadurch gekennzeichnet,**
daß das Gewinderohr (3, 103) an seinem spindelkopffernen Ende wenigstens drei im wesentlichen keilförmige Radialfinger (19, 119) aufweist und daß die in gleicher Anzahl auf der Außenseite der spindelkopffernen Druckplatte (1) vorhandenen Vertiefungen (23) sowie die jeweils zwischen zwei Vertiefungen (23) liegenden radialen Erweiterungen (22) der Durchsteicköffnung (24) außenseitig jeweils derart schrägflächig angesenkt sind, daß zumindest im Radienbereich der Radialfinger (19) für diese keine planebene Auflagefläche außerhalb der Vertiefungen (23) vorhanden ist.

2. Federnspanner nach Anspruch 1, dadurch gekennzeichnet, daß die Radialfinger am Umfang des Gewinderohres (3, 103) in im wesentlichen gleichen Winkelabständen voneinander angeordnet sind.

3. Federnspanner nach Anspruch 1 oder 2, dadurch gekennzeichnet, daß die Durchsteicköffnung (24) der spindelkopffernen Druckplatte (1) eine Weite aufweist, die nur wenig größer ist als der Außendurchmesser des Gewinderohres (3, 103) und kleiner ist als der Durchmesser des Führungsrohres (5, 105).

4. Federnspanner nach einem der Anspüche 1, 2 oder 3, dadurch gekennzeichnet, daß zwischen dem Führungsrohr (5, 105) und dem Gewinderohr (3) ein sowohl mit dem Führungsrohr (5, 105) als auch mit dem Gewinderohr (3) drehfest verbundenes jedoch relativ zu beiden axial bewegliches Kupplungsrohr (13, 113) angeordnet ist.

5. Federnspanner nach Anspruch 4, dadurch gekennzeichnet, daß das Kupplungsrohr (13) und das Gewinderohr (3) jeweils auf ihren zylindrischen Umfangsflächen wenigstens eine sich im wesentlichen über die jeweilige Gesamtlänge erstreckende, ebene Drehsicherungsfläche (14, 14') aufweisen, wobei an der Drehsicherungsfläche (14) des Kupplungsrohres (13) ein radial einwärts ragender Drehsicherungssteg (18) des Führungsrohres (5) und an der Drehsicherungsfläche (14') des Gewinderohres (3) ein einwärts ragender Drehsicherungssteg (18') des Kupplungsrohres (13) passend anliegt.

6. Federnspanner nach Anspruch 4 oder 5, dadurch gekennzeichnet, daß die Drehsicherungsflächen (14, 14') jeweils an ihren dem Axiallager (6) der Gewindespindel (4) zugekehrten Enden mit einer jeweils am anliegenden Drehsicherungssteg (18, 18') anschlagenden Anschlagfläche (16, 16') versehen sind.

7. Federnspanner nach Anspruch 5, dadurch gekennzeichnet, daß die Drehsicherungsstege (18, 18') jeweils an den spindelkopffernen Enden des Führungsrohres (5) bzw. des Kupplungsrohrer (13) durch freigeschnittene und einwärts geprägte Wandungsabschnitte gebildet sind.

8. Federnspanner nach einem der Ansprüche 4 bis 7, dadurch gekennzeichnet, daß die benutzbare Gewindelänge der Gewindespindel (4) höchstens gleich groß ist wie das Maß, das sich aus der Summe des maximalen Bewegungshubes ($1_2$), welchen das Kupplungsrohr (13) im Führungsrohr (5) hat und dem axialen Abstand ($1_3$), den die Anschlagfläche (16) der Drehsicherungsfläche (14) des Kupplungsrohrres (13) von diesem Drehsicherungssteg (18') hat, vermindert um den axialen Abstand ($a_2$), den die Anschlagfläche (16') der Drehsicherungsfläche (14') des Gewinderohres (3) vom Anfang des Innengewindes (7) hat.

9. Federnspanner nach einem der Ansprüche 1 bis 7, dadurch gekennzeichnet, daß zwischen der Gewindespindel (4) und dem Gewinderohr (3) eine Hohlspindel (46) angeordnet, welche ein mit der Gewindespindel (4) in Eingriff stehendes Innengewinde (48) und ein mit dem Innengewinde (7) des Gewinderohres (3) in Eingriff stehendes Außengewinde (47) aufweist.

10. Federnspanner nach Anspruch 9, dadurch gekennzeichnet, daß sich die Innengewinde (7, 48) sowohl des Gewinderohres (3) als auch der Hohlspindel (46) sich jeweils nur über einen kurzen Abschnitt am jeweils spindelkopfseitigen Ende erstrecken und daß die Gewindespindel (4) und/oder die Hohlspindel (46) mit einer Gewindesicherung (52, 56) gegen Herausdrehen aus dem jeweiligen Innengewinde (7, 48) des Gewinderohres (3) bzw. der Hohlspindel (46) versehen ist.

11. Federnspanner nach Anspruch 10, dadurch gekennzeichnet, daß die Gewindesicherungen (52, 56) jeweils aus Ringelementen bestehen, die unter erhöhtem Kraftaufwand durch das jeweilige Gegengewinde (7, 48) verformbar sind.

12. Federnspanner nach Anspruch 4, dadurch gekennzeichnet, daß das Führungsrohr (105) mit wenigstens einem axialen, am spindelkopffernen Rohrende geschlossenen Führungsschlitz (115, 116) versehen ist, in dem ein am spindelkopfseitigen Endabschnitt des Kupplungsrohres (113) angeordneter Führungsnocken (120, 121) geführt ist und daß das Kupplungsrohr (113) mit wenigstens einem an beiden Enden des Kupplungsrohres geschlossenen, axialen Führungsschlitz (122, 123) versehen ist, in dem ein am spindelkopfseitigen Endabschnitt des Gewinderohres (103) befestigter Führungsstift (124, 125) geführt ist.

13. Federnspanner nach Anspruch 12, dadurch gekennzeichnet, daß das Führungsrohr (105) und das Kupplungsrohr (113) jeweils zwei sich diametral gegenüberliegende Führungsschlitze (115, 116; 122, 123) aufweisen und das Kupplungsrohr (113) mit zwei diametralen Führungsnocken (120, 121) und das Gewinderohr (103) mit zwei diametralen Führungsstiften (124, 125) versehen ist.

14. Federnspanner nach Amspruch 12 order 13, dadurch gekennzeichnet, daß der oder die Führungsstifte (124, 125) kraftschlüssig aber lösbar am Gewinderohr (103) befestigt sind.

15. Federnspanner nach Anspruch 14, dadurch gekennzeichnet, daß die Führungsstifte (124, 125) jeweils aus zwei ineinander verspannten Schwerspannstiften bestehen, die jeweils in Radialbohrungen (126, 127) des Gewinderohres (103) eingepreßt sind.

16. Federnspanner nach Anspruch 14 odder 15, dadurch gekennzeichnet, daß die Führungsstifte (124, 125) kürzer sind als der Innendurchmesser des Gewinderohres (103).

17. Federnspanner nach Anspruch 12 oder 13, dadurch gekennzeichnet, daß die Führungsschlitze (115, 116) des Führungsrohres (105) spindelkopfseitig offen in Innern einer das Axialdrucklager (106, 106') der Gewindespindel (104, 104') aufnehmenden Lagermuffe (114) des Führungsrohres (105) enden.

18. Federnspanner nach Anspruch 17, dadurch gekennzeichnet, daß die offenen Enden der beiden Führungsschlitze (115, 116) des Führungsrohres (105) durch eine auf einer in ihrer radialen Breite der Wanddicke des Führungsrohres (105) entsprechenden Ringschulter (117) der Lagermuffe (114) aufsitzenden Lagerhülse (128), einen Lagerring oder eine Lagerscheibe (143) geschlossen sind.

19. Federnspanner nach einem der Ansprüche 1 bis 18, dadurch gekennzeichnet, daß die Gewindespindel (104') und ein das Schlüsselprofil aufweisender Schlüsselprofilkopf (109') durch eine Drehmoments-Überlastungskupplung (132, 137, 138) miteinander kraftschlüssig verbunden sind.

20. Federnspanner nach Anspruch 19, dadurch gekennzeichnet, daß ein Flanschring (108') der Gewindespindel (104') stirnseitig mit einem Rastzahnkranz (132) versehen ist, mit dem ein Gegen-Rastzahnkranz (137) des axial beweglich und drehbar auf einem Führungsansatz (133) der Gewindespindel (104') gelagerten Schlüsselprofilkopfes (109') durch axiale Federkräfte in Eingriff gehalten ist.

21. Federnspanner nach Anspruch 20, dadurch gekennzeichnet, daß in einer zylindrischen, stirnseitig offenen Ausnehmung (136) des Schlüsselprofilkopfes (109') konzentrisch um einen Gewindezapfen zwischen einer auf den Gewindezapfen (134) aufgeschraubten Spannmutter (139) und einer Ringschulter (140) der Ausnehmung (136) eine Druckfeder oder ein Tellerfedernpaket (138) angeordnet ist.

**Claims**

1. Spring tensioner for large helical springs, especially for motor vehicle axle springs, consisting of two loose, dish-like thrust plates (1, 2) each having a central push-through opening (24), and of a threaded spindle (4) having a spindle head (9) with spanner profile, which threaded spindle is mounted rotatably by means of an axial thrust bearing (6) in a cylindrical guide tube (5) which comprises, for the supporting of the thrust plate (1) on the spindle head side, a radial abutment face (12), and of a cylindrical threaded tube (3) provided with an internal threading for the screwing-in of the threaded spindle, which threaded tube is axially displaceably in rotation-fast connection with the guide tube through guide means (13) engaging by virtue of shape, and is provided on the circumference of its end section remote from the spindle head with radial fingers (19, 119), by the engagement of which in depressions of the thrust plate remote from the spindle head, which depressions are arraned externally in the marginal region of its push-through opening beside radial extensions which form passages for the radial fingers, the threaded tube is bringable into rotation-fast traction connection with the thrust plate,

characterised in that

the threaded tube (3, 103) comprises at its end remote from the spindle head at least three substantially wedge-shaped radial fingers (19, 119) and in that the depressions (23), present in equal number on the outside of the thrust plate (1) remote from the spindle head, and the radial extensions (22) of the push-through opening (24), lying in each case between two depressions (23), are each countersunk on the outside with oblique faces in such a way that at least in the radial region of the radial fingers (19) there is far these no flat level support surface outside the depressions (23).

2. Spring tensioner according to Claim 1, characterised in that the radial fingers are arranged on the circumference of the threaded tube (3, 103) at substantially equal angular intervals from one another.

3. Spring tensioner according to Claim 1 or 2, characterised in that the push-through opening (24) of the thrust plate (1) remote from the spindle head has a width which is only a little larger than the external diameter of the threaded tube (3, 103) and is smaller than the diameter of the guide tube (5, 105).

4. Spring tensioner according to Claim 1, 2 or 3, characterised in that between the guide tube (5, 105) and the threaded tube (3) there is arranged a coupling tube (13, 113) connected fast in rotation both with the guide tube (5,105) and with the threaded tube (3), but movable axially in relation to both.

5. Spring tensioner according to Claim 4, characterised in that the coupling tube (13) and the threaded tube (3) each comprise, on their cylindrical peripheral surfaces, at least one plane rotation-securing face (14, 14') extending substantially over the total length, in each case, while on the rotation-securing face (14) of the coupling tube (13) there rests in fitting manner a radially inwardly protruding rotation-securing flange (18) of the guide tube (5) and on the rotation-securing, surface (14') of the threaded tube (3) there rests in fitting manner an inwardly protruding rotation-securing flange (18') of the coupling tube (13).

6. spring tensioner according, to Claim 4 or 5, characterised in that the rotation-securing faces (14, 14') are each provided at their ends facing the axial bearing (6) of the threaded spindle (4) with a stop face (16, 16') striking upon the relevant. abutting rotation-securing flange (18, 18').

7. Spring tensioner according to Claim 5, characterised in that the rotation-securing flanges (18,18') are each formed at the ends of the guide tube (5) and of the coupling tube (13) remote from the spindle head by wall sections which are cut free and swaged inwards.

8. Spring tensioner according to any one of Claims 4 to 7, characterised in that the usable threading length of the threaded spindle (4) is at most the same size as the dimension which results from the sum of the maximum movement stroke ($l_2$) which the coupling tube (13) has in the guide tube (5) and the axial distance ($l_3$) which the stop face (16) of the rotation-securing face (14) of the coupling tube (13) has from this rotation-securing flange (18'), reduced by the axial distance ($a_2$) which the stop face (16') of the rotation-securing face (14') of the threaded tube (3) has from the beginning of the internal threading (7).

9. Spring tensioner according to any one of Claims 1 to 7, characterised in that between the threaded spindle (4) and the threaded tube (3) a hollow spindle (46) is arranged which comprises an internal threading (48) in engagement with the threaded spindle (4), and an external threading (47) in engagement with the internal threading (7) of the threaded tube (3).

10. Spring tensioner according to Claim 9, characterised in that the internal threadings (7, 48) both of the threaded tube (3) and of the hollow spindle (46) each extend over only a short section at the end on the spindle head side in each case, and in that the threaded spindle (4) and/or the hollow spindle (46) are provided with a thread fastening (52, 56) against turning out of the respective internal threading (7, 48) of the threaded tube (3) or of the hollow spindle (46), as the case may be.

11. Spring tensioner according to Claim 10, characterised in that the thread fastenings (52, 56) each consist of ring elements which are deformable by the respective counter-threading (7, 48), with increased expenditure of force.

12. Spring tensioner according to Claim 4, characterised in that the guide tube (105) is provided with at least one axial guide slot (115, 116) closed at the tube end remote from the spindle head, in which slot a guide dog (120, 121) arranged on the end section of the coupling tube (113) on the spindle head side is guided, and in that the coupling tube (113) is provided with at least one axial guide slot (122, 123) closed at the two ends of the coupling tube, in which slot a guide pin (124, 125) secured to the end section on the spindle head side of the threaded tube (103) is secured.

13. Spring tensioner according to Claim 12, characterised in that the guide tube (105) and the coupling tube (113) each comprise two mutually diametrically opposite guide slots (115, 116; 122, 123) and the coupling tube (113) is provided with two diametrical guide dogs (120, 121) and the threaded tube (103) is provided with two diametrical guide pins (124. 125).

14. Spring tensioner according to Claim 12 or 13, characterised in that the guide pin or pins (124, 125) is or are secured in force-engaging but releasable manner on the threaded tube (103).

15. Spring tensioner according to Claim 14, characterised in that the guide pins (124, 125) each consist of two spring cotters braced into one another, which are each pressed into radial bores (126, 127) of the threaded tube (103).

16. Spring tensioner according to Claim 14 or 15, characterised in that the guide pins (124, 125) are shorter than the internal diameter of the threaded tube (103).

17. Spring tensioner according to Claim 12 or 13, characterised in that the guide slots (115, 116) of the guide tube (105) terminate on the spindle head side openly in the interior of a bearing socket (114) of the guide tube (105), which socket accommodates the axial thrust bearing (106, 106') of the threaded spindle (104, 104').

18. Spring tensioner according to Claim 17, characterised in that the open ends of the two guide slots (115, 116) of the guide tube (105) are closed by a bearing sleeve (128), a bearing ring or a bearing plate (143) seated on a ring shoulder (117) of the bearing socket (114), the radial width of which shoulder corresponds to the wall thickness of the guide tube (105).

19. Spring tensioner according to any one of Claims 1 to 18, characterised in that the threaded spindle (104') and a spanner-profiled head (109') possessing the spanner profile are connected with one another in a manner engaging by virtue of force application, through a torque overload clutch (132, 137, 138).

20. Spring tensioner according to Claim 19, characterised in that a flange ring (103') of the threaded spindle (104') is provided on the end face with a detent toothed rim (132) with which a counter-detent toothed rim (137) of the spanner-profile head (109'), which is mounted axially movably and rotatably on a guide projection (133) of the threaded spindle (104') is held in engagement by axial spring forces.

21. Spring tensioner according to Claim 20, characterised in that a compression spring or a dished spring pack (138) is arranged in a cylindrical, terminally open aperture (136) of the spanner-profile head (109') concentrically about a threaded journal between a clamping nut (139), screwed on to the threaded journal (134) and a ring shoulder (140) of the aperture (136).

**Revendications**

1. Dispositif de serrage pour de gros ressorts hélicoïdaux, en particulier pour des ressorts d'essieux de véhicules automobiles, constitué par deux plaques de serrage mobiles (1,2) du genre plateaux présentant chacune une ouverture de passage centrale (24), ainsi que par une broche filetée (4) présentant une tête de broche (9) avec un profil à clé et qui au moyen d'un palier de butée (6) est montée, de façon à pouvoir tourner, dans un tube de guidage cylindrique (5), lequel présente une surface d'appui radiale (12) pour supporter la plaque de serrage (2) située du côté de la tête de broche, et par un tube taraudé cylindrique (3) qui, muni d'un taraudage pour le vissage de la broche filetée, est relié, de manière fixe en rotation mais axialement déplaçable, au tube de guidage par des moyens de guidage en liaison de forme (13) et est muni, à la périphérie de sa partie terminale éloignée de la tête de broche, de doigts radiaux (19, 119), grâce à la mise en prise desquels dans des évidements de la plaque de serrage éloignée de la tête de broche, lesquels évidements sont disposés extérieurement, dans la région du bord de son ouverture de passage, à côté d'élargissements radiaux qui forment des passages pour les doigts radiaux, le tube taraudé peut être mis en relation de traction, à assujettissement en rotation, avec la plaque de serrage, caractérisé en ce que le tube taraudé (3, 103) présente à son extrémité éloignée de la tête de broche au moins trois doigts radiaux (19, 119) sensiblement en forme de coin et en ce que les évidements (23) prévus, en le même nombre, sur le côté extérieur de la plaque de serrage (1) éloignée de la tête de broche ainsi que les élargissements radiaux (22) de l'ouverture de passage (24), situés chacun entre deux évidements (23), sont chacun extérieurement biseautés par fraisage de telle manière qu'au moins dans la région des rayons des doigts radiaux (19) il ne s'offre à ceux-ci aucune surface d'appui plane à l'extérieur des évidements (23).

2. Dispositif de serrage pour ressorts selon la revendication 1, caractérisé en ce que les doigts radiaux sont disposés à la périphérie du tube taraudé (3, 103) à des intervalles angulaires sensiblement égaux les uns des autres.

3. Dispositif de serrage pour ressorts selon la revendication 1 ou 2, caractérisé en ce que l'ouverture de passage (24) de la plaque de serrage (1) éloignée de la tête de broche présente une largeur qui n'est que légèrement supérieure au diamètre extérieur du tube taraudé (3, 103) et est inférieure au diamètre du tube de guidage (5, 105).

4. Dispositif de serrage pour ressorts selon l'une quelconque des revendications précédentes, caractérisé en ce qu'entre le tube de guidage (5, 105) et le tube taraudé (3) est monté un tube de liaison (13, 113) relié de manière fixe en rotation tant au tube de guidage (5, 105) qu'au tube taraudé (3) mais qui est axialement déplaçable par rapport à ces deux tubes.

5. Dispositif de serrage pour ressorts selon la revendication 4, caractérisé en ce que le tube de liaison (13) et le tube taraudé (3) présentent chacun sur leur surface périphérique cylindrique au moins une surface plane (14, 14') d'assujettissement en rotation s'étendant sensiblement sur toute la longueur respective, une nervure (18) d'assujettissement en rotation prévue sur le tube de guidage (5) et qui fait saillie radialement vers l'intérieur se trouvant de manière ajustée au contact de la surface (14) d'assujettissement en rotation prévue sur le tube de liaison (13) et une nervure (18') d'assujettissement en rotation prévue sur le tube de liaison (13) et qui fait saillie vers l'intérieur se trouvant de manière ajustée au contact de la surface (14') d'assujettissement en rotation prévue sur le tube taraudé (3).

6. Dispositif de serrage pour ressorts selon la revendication 4 ou 5, caractérisé en ce que les surfaces (14, 14') d'assujettissement en rotation sont chacune munies à leur extrémité située du côté du palier de butée (6) de la broche filetée (4) d'une surface de butée (16, 16') butant respectivement contre la nervure d'assujettissement en rotation adjacente (18, 18').

7. Dispositif de serrage pour ressorts selon la revendication 5, caractérisé en ce que les nervures (18, 18') d'assujettissement en rotation sont formées respectivement à l'extrémité du tube de guidage (5) ou du tube de liaison (13), éloignée de la tête de broche, par des parties de paroi dégagées par coupe et repoussées vers l'intérieur.

8. Dispositif de serrage pour ressorts selon l'une quelconque des revendications 4 à 7, caractérisé en ce que la longueur de filetage utilisable de la broche filetée (4) est au maximum égale à la dimension qui résulte de la somme de la course maximale ($l_2$) dont le tube de liaison (13) dispose dans le tube de guidage (5) et de la distance axiale ($l_3$) que la surface de butée (16) de la surface d'assujettissement en rotation (14) du tube de liaison (13) présente par rapport à la nervure d'assujettissement en rotation (18'), diminuée de la distance axiale ($a_2$) que la surface de butée (16') de la surface d'assujettissement en rotation (14') du tube taraudé (3) présente par rapport au commencement du taraudage (7).

9. Dispositif de serrage pour ressorts selon l'une quelconque des revendications 1 à 7, caractérisé en ce qu'entre la broche filetée (4) et le tube taraudé (3) est montée une broche creuse (46) qui présente un taraudage (48) en prise avec la broche filetée (4) et un filetage extérieur (47) en prise avec le taraudage (7) du tube taraudé (3).

10. Dispositif de serrage pour ressorts selon la revendication 9, caractérisé en ce que les taraudages (7, 48) respectivement du tube taraudé (3) et de la broche creuse (46) ne s'étendent chacun que sur un court tronçon situé à l'extrémité côté tête de broche et en ce que la broche filetée (4) et/ou la broche creuse (46) sont munies d'un organe de retenue de filetage (52, 56) l'empêchant d'être dévissée hors du taraudage respectif (7, 48) du tube taraudé (3) ou de la broche creuse (46).

11. Dispositif de serrage pour ressorts selon la revendication 10, caractérisé en ce que les organes de retenue de filetage (52, 56) sont constitués respectivement par des organes annulaires qui moyennant une dépense d'effort accrue peuvent être déformés par le filetage complémentaire respectif (7, 48).

12. Dispositif de serrage pour ressorts selon la revendication 4, caractérisé en ce que le tube de guidage (105) présente au moins une fente de guidage axiale (115, 116), fermée à l'extrémité du tube éloignée de la tête de broche, et dans laquelle est guidée une saillie de guidage (120, 121) disposée à la partie terminale côté tête de broche du tube de liaison (113) et en ce que le tube de liaison (113) présente au moins une fente de guidage axiale (122, 123) fermée aux deux extrémités du tube de liaison et dans laquelle est guidée une goupille de guidage (124, 125) fixée à la partie terminale côté tête de broche du tube taraudé (103).

13. Dispositif de serrage pour ressorts selon la revendication 12, caractérisé en ce que le tube de guidage (105) et le tube de liaison (113) présentent chacun deux fentes de guidage diamétralement opposées (115, 116 ; 122, 123) et le tube de liaison (113) est muni de deux saillies de guidage diamétralement opposées (120, 121) et le tube taraudé (103) de deux goupilles de guidage diamétralement opposées (124, 125).

14. Dispositif de serrage pour ressorts selon la revendication 12 ou 13, caractérisé en ce que la goupille ou les goupilles de guidage (124, 125) sont fixées en liaison dynamique mais de façon amovible au tube taraudé (103).

15. Dispositif de serrage pour ressorts selon la revendication 14, caractérisé en ce que les goupilles de guidage (124, 125) sont chacune constituées par deux goupilles élastiques à haut pouvoir d'amortissement emboîtées l'une dans l'autre et sont respectivement enfoncées dans des trous radiaux (126, 127) du tube taraudé (103).

16. Dispositif de serrage pour ressorts selon la revendication 14 ou 15, caractérisé en ce que les goupilles de guidage (124, 125) sont plus courtes que le diamètre intérieur du tube taraudé (103).

17. Dispositif de serrage pour ressorts selon la revendication 12 ou 13, caractérisé en ce que les fentes de guidage (115, 116) du tube de guidage (105) se terminent, ouvertes, à l'intérieur d'un manchon de montage (114) du tube de guidage (105), manchon qui reçoit le palier de butée (106, 106') de la broche filetée (104, 104').

18. Dispositif de serrage pour ressorts selon la revendication 17, caractérisé en ce que les extrémités ouvertes des deux fentes de guidage (115, 116) du tube de guidage (105) sont fermées par une douille de montage (128) prenant appui sur un épaulement annulaire (117) du manchon de montage (114), lequel épaulement correspond dans sa largeur radiale à l'épaisseur de paroi du tube de guidage (105), par une bague de montage ou un disque de montage (143).

19. Dispositif de serrage pour ressorts selon l'une quelconque des revendications précédentes, caractérisé en ce que la broche filetée (104') et une tête à profil à clé (109') présentant le profil à clé sont reliées entre elles en liaison dynamique par un embrayage de surcharge de couple (132, 137, 138).

20. Dispositif de serrage pour ressorts selon la revendication 19, caractérisé en ce qu'une bague (108') formant bride de la broche filetée (104') est munie frontalement d'une couronne dentée (132) avec laquelle est maintenue en prise, par des efforts de ressort axiaux, une couronne dentée complémentaire (137) de la tête à profil à clé (109') montée, de façon à pouvoir se déplacer axialement et tourner, sur un prolongement de guidage (133) de la broche filetée (104').

21. Dispositif de serrage pour ressorts selon la revendication 20, caractérisé en ce que dans un évidement cylindrique frontalement ouvert (136) de la tête à profil à clé (109') est monté concentriquement autour d'une goupille filetée, entre un écrou de serrage (139) vissé sur la goupille filetée (134) et un épaulement annulaire (140) de l'évidement (136), un ressort de compression ou un empilement de rondelles Belleville (138).

FIG.1
FIG.2
FIG.3
FIG.4
FIG.8

FIG. 5

FIG. 7

FIG. 6

FIG. 9

FIG.10

FIG. 11

FIG.15

FIG.14

FIG.12

FIG.13

FIG.16

FIG.17

FIG.18

FIG.19

FIG. 20

FIG.21

FIG.22